# EUROPÄISCHE PATENTSCHRIFT

(11) **EP 2 173 594 B1**
(45) Veröffentlichungstag und Bekanntmachung des Hinweises auf die Patenterteilung: **12.02.2014**
(21) Anmeldenummer: 08785038.4
(22) Anmeldetag: 24.07.2008
(51) Int. Cl.: B60W 30/18

(54) **VERFAHREN ZUM SCHALTEN EINES STUFENGETRIEBEGANGS EINES KRAFTFAHRZEUGS IN ABHÄNGIGKEIT VON DER ANTRIEBSWELLENDREHZAHL**
METHOD FOR SHIFTING A GEARSPEED OF A STEP-BY-STEP VARIABLE-SPEED TRANSMISSION OF A MOTOR VEHICLE AS A FUNCTION OF THE ROTATIONAL SPEED OF THE DRIVE SHAFT
PROCEDE POUR COMMUTER UN RAPPORT D'UNE BOITE DE VITESSES D'UN VEHICULE AUTOMOBILE EN FONCTION DE LA VITESSE DE ROTATION DE L'ARBRE D'ENTREE

(30) Priorität: 27.07.2007 DE 102007036405
(43) Veröffentlichungstag der Anmeldung: 14.04.2010
(73) Patentinhaber: GETRAG Getriebe- und Zahnradfabrik Hermann Hagenmeyer GmbH & Cie KG, 74199 Untergruppenbach (DE)
(72) Erfinder: DREHER, Patrick, 78073 Bad Dürrheim (DE); SEUFERT, Martin, 71711 Steinheim (DE)
(74) Vertreter: Witte, Weller & Partner
(86) Internationale Anmeldenummer: PCT/EP2008/006085
(87) Internationale Veröffentlichungsnummer: WO 2009/015822

(56) Entgegenhaltungen:
- EP-A- 0 161 521
- DE-A1-102005 036 895
- JP-A- 63 072 952

## Beschreibung

Die vorliegende Erfindung betrifft ein Verfahren zum Schalten, insbesondere Einund/oder Auslegen, von Gängen eines automatisierten Stufengetriebes eines Kraftfahrzeugs, wobei das Getriebe mit einer Motorabtriebswelle über eine als Trennkupplung wirkende Reibungskupplung verbindbare Antriebswelle und eine an ein Antriebsrad bzw. Antriebsräder des Kraftfahrzeugs gekoppelte Abtriebswelle aufweist, wobei ein Schaltvorgang, insbesondere nur, in Abhängigkeit von Drehzahlen der Wellen erfolgt, wobei jedem Gang eine als Schaltkupplung wirkende Synchronisierungseinrichtung zugeordnet ist, um die Antriebswelle mit der Abtriebswelle zu verbinden.

Steuerungsverfahren für automatische bzw. automatisierte Getriebe sind in den deutschen Patentanmeldungen DE 101 22 158 A1, DE 10 2005 036 895 A1 und DE 10 2005 004 339 A1 offenbart.

Automatisierte Getriebe, wie z.B. Doppelkupplungsgetriebe oder automatisierte Schaltgetriebe, benötigen zum Einlegen von Gängen (Weg)-Sensoren, um die tatsächliche Position zugehöriger Schaltstangen erfassen zu können. Als Wegsensoren werden z.B. Hall-Elemente eingesetzt. Falls ein Fahrer oder ein für die Schaltung zuständiges Steuergerät einen Schaltwunsch ausgibt, wird die entsprechende Schaltstange aus einer aktuellen Position über einen Regelkreis (Sollposition, Rücklesen aktueller Position über Sensor) in eine gewünschte Position gebracht.

Wenn ein Wegsensor ausfällt, muss die entsprechende Schaltstange gesperrt werden und kann nicht mehr bewegt werden. Anderenfalls läuft man Gefahr, dass bei eingelegter Schaltstange eine weitere Schaltstange eingelegt wird, was zu einer Zerstörung des Getriebes führt. Das Sperren bzw. Blockieren hat jedoch große Nachteile für die Verfügbarkeit des Kraftfahrzeugs. Fällt der Sensor z.B. bei einem eingelegten Gang aus, kann z.B. bei einem Doppelkupplungsgetriebe in diesem Teilgetriebe kein weiterer Gang mehr eingelegt werden. Bei einem automatisierten Schaltgetriebe kann in diesem Fall überhaupt kein Gang mehr eingelegt werden.

Deshalb wird im Stand der Technik vorgeschlagen, redundante Sensoren vorzusehen, so dass bei Ausfall eines Sensors mit einem redundanten Sensor weitergearbeitet werden kann. Dies resultiert jedoch in höheren Herstellungskosten. Es wird mehr Bauraum benötigt. Der Steueraufwand ist größer. Die Steuerungssoftware muss entsprechend ausgelegt werden. Als ein wesentlicher Nachteil ist eine geringere Zuverlässigkeit des Gesamtsystems zu nennen, da doppelt so viele Sensoren kaputtgehen können.

Den Stand der Technik nach dem Oberbegriff des Anspruchs 1 stellt hier die EP 0 161 521 dar.

Die Erfinder haben sich deshalb die Aufgabe gestellt, ein Verfahren zum Betreiben eines automatisierten Kraftfahrzeuggetriebes zu entwickeln, mit dem Schaltvorgänge sicher und zuverlässig durchgeführt werden können, ohne dazu Informationen von Wegsensoren zu benötigen. Insbesondere haben sich die Erfinder die Aufgabe gestellt, ein Notfallprogramm vorzusehen, damit ein Getriebe selbst beim Ausfall eines (einfach) vorgesehenen Wegsensors weiterhin zuverlässig und sicher betrieben werden kann.

Diese Aufgabe wird gemäß der vorliegenden Erfindung mit einem Verfahren der eingangs erwähnten Art gelöst, das die folgenden Schritte aufweist: Stellen der Trennkupplung in eine Schleppstellung derart, dass ein geringes, vorzugsweise vordefiniertes, Schleppmoment von der Motorabtriebswelle auf die Antriebswelle übertragen wird, welches ausreicht, um eine Drehzahl der Antriebswelle bei geöffneter Schaltkupplung auf eine Drehzahl der Motorabtriebswelle zu bringen; Einstellen der Drehzahl der Motorabtriebswelle auf einen vorbestimmten Wert, der sich sowohl von einer Drehzahl eines Quellgangs als auch einer Drehzahl eines Zielgangs hinreichend unterscheidet; Stellen der Schaltkupplung des Quellgangs in Richtung einer geöffneten Stellung, um die Antriebswelle und Abtriebswelle voneinander zu trennen; Erfassen der Drehzahl der Abtriebswelle für eine bestimmte Zeitdauer, die sich zumindest an einen Zeitpunkt, wenn die Schaltkupplung des Quellgangs in der geöffneten Stellung ist, anschließt; Bestimmen einer Änderung der Drehzahl der Antriebswelle während der vorbestimmten Zeitdauer; und Bestimmen, ob die so bestimmte Änderung innerhalb vorgegebener Toleranzen einer erwarteten Drehzahländerung liegt.

Die Entscheidung, ob ein neuer Gang eingelegt werden kann bzw. ob ein alter Gang tatsächlich ausgelegt ist, kann getroffen werden, ohne dass Informationen des entsprechenden Wegsensors des zu betätigenden Gangs vorliegen. Indem die Trennkupplung leicht zugestellt wird, so dass ein vordefiniertes Schleppmoment übertragen wird, und indem die Motordrehzahl auf einen Wert eingestellt wird, der sich hinreichend von der Drehzahl des Quellgangs unterscheidet, wird sich die Antriebswellendrehzahl bei geöffneter Schaltkupplung in Richtung der zuvor eingestellten Motordrehzahl bewegen. Je größer der Abstand zwischen der Drehzahl der Antriebswelle des Getriebes bei geschlossener Schaltkupplung und der zuvor eingestellten Motorwellendrehzahl ist, desto stärker wird die Änderung bei offener Schaltkupplung ausfallen.

Sollte ein Gang jedoch wider Erwarten nicht ausgelegt worden sein, so würden beim angeblichen Öffnen der Schaltkupplung die Antriebswelle und die Abtriebswelle des Getriebes weiterhin verbunden bleiben. Das relativ geringe Schleppmoment der Motorwelle reicht dann nicht aus, um den (noch immer verbundenen) Getriebestrang auf die gleiche Drehzahl wie den Motor zu bringen, d.h. die Drehzahl der Antriebswelle wird sich dann nicht ändern. Die erwartete Änderung tritt also nicht ein. Somit weiß man, dass der Gang tatsächlich nicht ausgelegt wurde, obwohl man davon ausgegangen ist.

Ist der Sensor jedoch nur defekt und wurde der Gang tatsächlich ausgelegt, so kann man die Änderung feststellen und hat somit Gewissheit darüber, dass das Getriebe weiterhin ordnungsgemäß funktioniert.

Das vorliegende Verfahren kann auch in Getrieben eingesetzt werden, die bei ihren Synchronisierungseinrichtungen über gar keine Wegsensoren verfügen.

Deshalb ist es möglich, dass man Wegsensoren entweder überhaupt nicht oder zumindest nicht redundant verbaut. Somit ist ein geringerer Bauraum erforderlich. Der Steuergeräteaufwand wird reduziert, was sich auch in einem geringeren Softwareaufwand widerspiegelt.

Gemäß einer bevorzugten Ausführungsform wird die Schaltkupplung des Quellgangs zurückgestellt, wenn sich die Drehzahl der Antriebswelle während der vorbestimmten Zeitdauer entgegen einer erwarteten Richtung ändert.

Wenn sich die Drehzahl der Antriebswelle während der vorbestimmten Zeitdauer (Zeitfenster) nicht auf den erwarteten Zielwert, sondern auf einen anderen Wert (z.B. Änderung auf Drehzahl des gegenüberliegenden (H-Schaltung) bzw. benachbarten (Schaltwalze) Gangs, oder Änderung auf sonstige Drehzahl) ändert, kann davon ausgegangen werden, dass ein Gang eingelegt wurde, der dem auszulegenden Gang gegenüberliegt. In diesem Fall war der Auslegvorgang nicht erfolgreich. Die Synchronisierungseinstellung wurde über ihre Neutralstellung hinausbewegt, so dass sie anschließend wieder zurückbewegt werden muss. Das hier vorgeschlagene Verfahren ist dazu in der Lage, eine solche Situation zu erkennen und zu beheben.

Außerdem ist es von Vorteil, wenn das Verfahren den weiteren Schritt aufweist, gemäß dem eine Stellkraft auf eine Synchronisierungseinrichtung des Zielgangs ausgeübt wird.

Auf diese Weise ist es möglich, ohne Informationen eines Wegsensors, einen Zielgang nur durch Kontrolle der Antriebswellendrehzahl einzulegen.

Bei einer weiteren Ausgestaltung wird der Schaltvorgang abgebrochen, wenn die so bestimmte Drehzahländerung außerhalb der vorgegebenen Toleranzen der erwarteten Drehzahländerung liegt.

Dies ist ein klares Zeichen dafür, dass ein Schaltvorgang nicht erfolgreich durchgeführt wurde. Um zu verhindern, dass das Getriebe (schwer) beschädigt oder sogar vollständig zerstört wird, wird der Schaltvorgang abgebrochen. Insbesondere wird der Gang, ein Teil des Getriebes oder das gesamte Getriebe gesperrt.

Weiterhin ist es bevorzugt, wenn die Trennkupplung zumindest während dieser vorbestimmten Zeitdauer in der Schleppstellung verbleibt.

Nur wenn die Trennkupplung in der Schleppstellung steht, kann überhaupt vom Motor ein Drehmoment an den Getriebestrang übertragen werden. Um ausreichend Zeit für die Bewertung der Änderung zu haben, sollte die Trennkupplung mindestens genau so lang in der Schleppstellung bleiben, wie das für die Bewertung erforderliche Zeitfenster andauert.

Gemäß einer weiteren Ausgestaltung wird das Verfahren als Notfallprogramm angewendet.

Wenn ein Wegsensor einer herkömmlichen Schaltkupplung ausfällt, muss kein redundanter Wegsensor vorgesehen werden. Um schalten zu können, wird einfach gemäß dem erfindungsgemäßen Verfahren vorgegangen.

Außerdem ist es von Vorteil (z.B. bei einem Doppelkupplungsgetriebe), wenn in einen Automatmodus gewechselt wird. Dadurch verbleibt ausreichend Zeit, den gewünschten Gang, wie beschrieben, vorzuwählen.

Ansonsten werden in einem Automatmodus Schaltvorgänge nur mit Zugkraftunterbrechung, d.h. bei vollständig geöffneter Trennkupplung, durchgeführt. Auf diese Weise kann verhindert werden, dass während des Ein- oder Auslegens eines Gangs Kraft vom Motor auf das Getriebe übertragen wird.

Ein weiterer Vorteil ist darin zu sehen, wenn gleichzeitig zum Stellen der Trenn- und Schaltkupplung ein Motoreingriff erfolgt.

Ein Motoreingriff kann z.B. durch Verstellen einer Drosselklappe des Motors erreicht werden. Dadurch lässt sich die Drehzahl des Motors regeln.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Schaubild eines bekannten Antriebsstrangs;
- Fig. 2: einen vereinfacht dargestellten Antriebsstrang der Fig. 1;
- Fig. 3: ein Drehzahl-Zeit-Diagramm während eines Vorgangs, bei dem ein Gang aus einer Neutralstellung eingelegt wird, wobei das Kraftfahrzeug steht;
- Fig. 4: ein Drehzahl-Zeit-Diagramm, das einen Vorgang zeigt, bei dem aus einer Neutralstellung während einer Fahrt des Kraftfahrzeugs hochgeschaltet wird;
- Fig. 5: ein Drehzahl-Zeit-Diagramm, das einen Vorgang zeigt, bei dem während der Fahrt aus dem zweiten Gang in den dritten Gang hochgeschaltet wird;
- Fig. 6: ein Drehzahl-Zeit-Diagramm, das einen Vorgang veranschaulicht, bei dem während der Fahrt aus dem fünften Gang in den vierten Gang heruntergeschaltet wird;
- Fig. 7: ein Drehzahl-Zeit-Diagramm, das einen Vorgang veranschaulicht, bei dem im Stand aus einem Gang in die Neutralstellung heruntergeschaltet wird;
- Fig. 8: ein Flussdiagramm, das einen Einlegevorgang gemäß der vorliegenden Erfindung veranschaulicht; und
- Fig. 9: ein Flussdiagramm, das einen Auslegevorgang gemäß der vorliegenden Erfindung veranschaulicht.

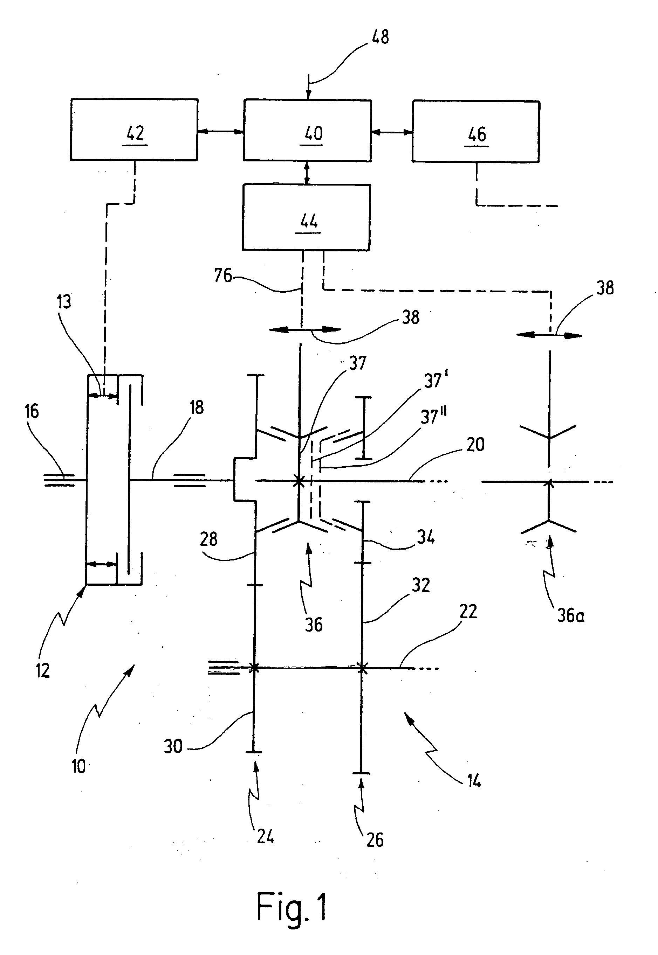

In Fig. 1 ist ein Antriebsstrang eines Kraftfahrzeugs generell bei 10 gezeigt.

Der Antriebsstrang 10 umfasst eine als Trenn- bzw. Anfahrkupplung wirkende Reibkupplung 12 und ein Stufengetriebe 14. Obwohl hier ein einfaches Stufengetriebe gezeigt ist, lässt sich die nachfolgend erläuterte Erfindung auch auf Doppelschaltgetriebe anwenden.

Die Trennkupplung (TK) 12 ist eine Reibungskupplung, die mittels eines schematisch angedeuteten Kupplungsaktuators 13 betätigt werden kann. In einer geschlossenen Stellung verbindet die Trennkupplung 12 eine Motorabtriebswelle (AB) 16 kraftschlüssig mit einer Eingangswelle 18 des Getriebes 14. In einer geöffneten Stellung sind die zwei Wellen 16, 18 voneinander getrennt. Während des Öffnens und Schließens der Trennkupplung 12 durchläuft die Trennkupplung 12 eine Schleifphase. Hierbei treten zwei Elemente der Trennkupplung 12 mit unterschiedlichen Drehzahlen reibend miteinander in Eingriff. Bei einem so genannten "Schlepppunkt" hat der Kupplungsaktuator 13 die beiden mit unterschiedlicher Drehzahl drehenden Kupplungselemente gerade so nahe aneinander gerückt, dass ein vordefiniertes (geringes) Schleppdrehmoment von der Motorabtriebswelle 16 auf die Getriebeantriebswelle 18 übertragen wird. Die Kupplungselemente weisen dann aber weiterhin unterschiedliche Drehzahlen auf.

Das Stufengetriebe 14 überträgt die Leistung des Motors des Kraftfahrzeugs von der Getriebeeingangswelle bzw. der Antriebswelle (AN) 18 auf eine Getriebeausgangswelle bzw. eine Abtriebswelle (AB) 20.

Das Stufengetriebe 14 ist hier exemplarisch in an sich bekannter Weise als Vorgelegegetriebe ausgeführt und besitzt eine Vorgelegewelle 22.

Das Getriebe 14 umfasst eine Mehrzahl von Radsätzen, von denen in Fig. 1 aus Gründen der übersichtlichen Darstellung nur zwei Radsätze 24, 26 gezeigt sind.

jeder Radsatz 24, 26 umfasst zwei Zahnräder. Der Radsatz 24 umfasst bei der dargestellten Ausführungsform ein fest mit der Antriebswelle 18 verbundenes Zahnrad 28 sowie ein fest mit der Vorgelegewelle 22 verbundenes Zahnrad 30.

Der zweite Radsatz 26 umfasst ein fest mit der Vorgelegewelle 22 verbundenes Zahnrad 32 und ein auf der Abtriebswelle 20 gelagertes Zahnrad 34, welches als Losrad ausgebildet ist.

Zwischen den Radsätzen 24, 26 ist an der Abtriebswelle 20 eine als Synchronisierungseinrichtung 36 ausgebildete Schaltkupplung (SK) angeordnet.

Die Synchronisierungseinrichtung 36 ist in Fig. 1 in einer ersten Schließstellung 37 gezeigt, bei der die Synchronisierungseinrichtung 36 das Zahnrad 28 und die Abtriebswelle 20 formschlüssig miteinander verbindet. In Fig. 1 sind zwei weitere Stellungen der Synchronisierungseinrichtung 36 gezeigt. In einer zweiten Schließstellung 37" verbindet die Synchronisierungseinrichtung 36 das Zahnrad 34 des zweiten Radsatzes formschlüssig mit der Abtriebswelle 20. Zwischen den zwei Schließstellungen 37, 37" ist eine Offenstellung 37' gezeigt, in der die Synchronisierungseinrichtung 36 auf der Abtriebswelle 20 mitläuft und weder das Zahnrad 28 noch das Zahnrad 34 mit der Abtriebswelle 20 verbindet.

Die Synchronisierungseinrichtung 36 ist beim Einlegen eines Gangs, also beim Bewegen von der Offenstellung 37' in eine der Schließstellungen 37, 37" dazu in der Lage, Differenzdrehzahlen zwischen der Abtriebswelle 20 und dem mit dieser zu verbindenden Zahnrad 28 bzw. 34 auf Null zu reduzieren, um somit die beiden Getriebebauteile zu synchronisieren.

Die Synchronisierungseinrichtung 36 ist mittels eines Aktuators 38 des Getriebes 14 auf der Abtriebswelle 20 hin- und herbewegbar.

Das Getriebe 14 umfasst neben den Radsätzen 24, 26 noch weitere Radsätze und entsprechend noch weitere Synchronisierungseinrichtungen, von denen in Fig. 1 eine weitere Synchronisierungseinrichtung 36a schematisch gezeigt ist. Die weitere Synchronisierungseinrichtung 36a ist ebenfalls mittels eines Getriebeaktuators 38 betätigbar.

Bei manchen Gangwechseln ist es so, dass eine Schaltkupplung 36 aus ihrer ersten Schließstellung 37 durch ihre Offenstellung 37' in ihre zweite Schließstellung bewegt wird. Es gibt jedoch genau so Gangwechsel, bei denen bspw. die Synchronisierungseinrichtung 36 aus ihrer ersten Schließstellung 37 in ihre Offenstellung 37' bewegt wird und anschließend eine weitere Synchronisierungseinrichtung 36a aus ihrer Offenstellung in eine Schließstellung bewegt wird.

Das Kraftfahrzeug, in das der Antriebsstrang 10 eingebaut ist, umfasst ferner eine zentrale Steuerung 40, eine Kupplungssteuerung 42, eine Getriebesteuerung 44 und eine Motorsteuerung 46. Die Kupplungssteuerung 42 und die Getriebesteuerung 44 sind mit dem Kupplungsaktuator 13 bzw. dem Getriebeaktuator 38 verbunden.

Die Motorsteuerung 46 ist mit Mitteln zur Beeinflussung der Motorleistung verbunden, üblicherweise mit einer Drosselklappe.

Die zentrale Steuerung 40 ist mit der Kupplungssteuerung 42, der Getriebesteuerung 44 und der Motorsteuerung 46 verbunden und koordiniert deren Steuerungsaufgaben. Es versteht sich, dass die in Fig. 1 als einzelne Steuerungen gezeigten Elemente in Form von Software implementiert werden können, wobei die Einzelsteuerung 42, 44 und 46 jeweils einzelne Programmmodule eines Gesamtsteuerungsprogramms bilden können.

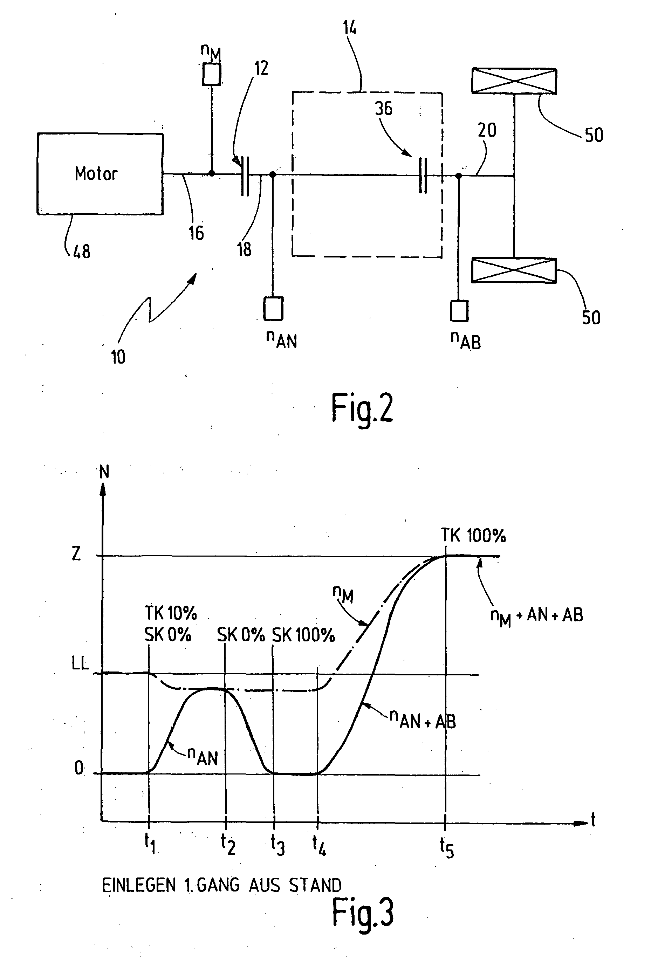

Fig. 2 zeigt nochmals den Antriebsstrang 10 der Fig. 1, jedoch in stark schematisierter Form. Ein Motor 48 ist als Block gezeigt. Ferner ist dargestellt, dass die Abtriebswelle 20 mit Antriebsrädern 50, z.B. eines Kraftfahrzeugs (nicht detaillierter dargestellt), verbunden ist.

Durch die Trennkupplung 12 sowie die Schaltkupplung(en) 36 kann der Antriebsstrang 10 in drei Teile unterteilt werden, die jeweils mit unterschiedlichen Drehzahlen drehen können. Um die verschiedenen Drehzahlen zu bestimmen, sind die entsprechenden Wellen mit Drehgebern verbunden. Die Motorwelle 16 ist mit einem Drehgeber verbunden, um die Motordrehzahl n_{M} zu bestimmen. Die Antriebswelle 18 ist mit einem weiteren Drehgeber verbunden, um die Antriebswellendrehzahl n_{AN} zu bestimmen. Die Abtriebswelle 20 ist mit einem noch weiteren Drehgeber verbunden, um die Abtriebswellendrehzahl n_{AB} zu bestimmen; alternativ könnte auch die Drehzahl der Räder 50 bestimmt bzw. gemessen werden.

Anhand der Fig. 2 lässt sich auch recht gut verstehen, warum das oben erwähnte Schleppmoment (Trennkupplung 12 "leicht" zugestellt) ausreicht, um die Drehzahl der Antriebswelle 18 mit der Drehzahl des Motors 48 zu synchronisieren. In diesem Fall hat das Getriebe 14 eine relativ geringe Gesamtmasse im Vergleich dazu, wenn die Antriebswelle 18 mit der Abtriebswelle 20 (und somit mit dem Rest des Kraftfahrzeugs) verbunden ist. Wenn die Schaltkupplung 36 geschlossen ist und das Fahrzeug insbesondere steht, wird das durch die Trennkupplung 12 in der Schleppstellung übertragene Schleppmoment nicht ausreichen können, um die Drehzahlen der Wellen zu synchronisieren. Wenn die Drehzahlen synchronisiert würden, müsste sich das Fahrzeug bewegen. Das Schleppmoment wird also vorzugsweise so gewählt, dass sich das Fahrzeug nicht bewegt. Andererseits reicht dieses Schleppmoment bereits, und insbesondere gerade, aus, um die Antriebswelle - bei offener Schaltkupplung - zu synchronisieren.

Bezug nehmend auf Fig. 3 ist ein erster Anwendungsfall des erfindungsgemäßen Verfahrens gezeigt. Dabei wird der erste Gang (Zielgang Z) eingelegt, während das Fahrzeug steht.

Am Anfang dreht sich die Motorwelle im Leerlauf (LL). Die Drehzahl n_{M} des Motors ist in Fig. 3 mit einer strichpunktierten Linie dargestellt.

Die Drehzahl n_{AN} der Antriebswelle beträgt am Anfang Null und ist mit einer durchgezogenen Linie dargestellt.

Zu einem Zeitpunkt to wird die Trennkupplung 12 in die Schleppstellung bewegt, z.B. durch den Kupplungsaktuator 13 der Fig. 1. In Fig. 3 ist die Schleppstellung durch "TK 10 %" angedeutet. Die Schaltkupplung ist zum Zeitpunkt t₁ geöffnet, was in der Fig. 3 durch "SK 0 %" angedeutet ist (0 %, weil die Schaltkupplung nicht geschlossen ist). Sobald die Trennkupplung in die Schleppstellung gebracht wurde, wird ein vordefiniertes, geringes Drehmoment, vorzugsweise von einigen Newtonmetern, auf die Antriebswelle des Getriebes übertragen. Deshalb fällt die Drehzahl n_{M} des Motors, wobei vorausgesetzt wurde, dass hier kein Motoreingriff (z.B. mittels Drosselklappe) erfolgt, um die Motordrehzahl nachzuregeln, und die Antriebsdrehzahl n_{AN} steigt, bis sie sich an die Motordrehzahl angeglichen hat.

Zu einem Zeitpunkt t₂ erfolgt ein Gangwechselbefehl. Die Schaltkupplung beginnt, sich zu schließen. Abtriebswelle und Antriebswelle werden also miteinander verbunden. Die Drehzahl der Antriebswelle fällt wieder, da das Fahrzeug steht und die Drehzahl der Abtriebswelle somit Null ist. Die tatsächlichen Synchronisierungsvorgänge beim Verbinden der Antriebswelle mit der Abtriebswelle sind aus Gründen der Vereinfachung hier nicht detailgetreu dargestellt. Ähnliches gilt für den Verlauf der Kurve für die Motordrehzahl.

Zu einem Zeitpunkt t₃ ist die Schaltkupplung vollständig geschlossen (SK 100 %). Antriebswelle und Getriebewelle sind kraftschlüssig miteinander verbunden. Der erste Gang ist eingelegt.

Zu einem Zeitpunkt t₄ beginnt die Steuerung 40 damit, die Trennkupplung vollständig zu schließen. Ab diesem Moment wird immer mehr Drehmoment von der Motorwelle auf die Getriebewellen übertragen. Die Drehzahlen der Wellen gleichen sich immer mehr an.

Zu einem Zeitpunkt ts ist die Trennkupplung vollständig geschlossen (TK 100 %). Motorwelle, Antriebswelle und Abtriebswelle drehen alle mit der gleichen Geschwindigkeit. Es versteht sich, dass im Zeitraum zwischen t₄ und ts die Motorleistung erhöht werden muss, da das Fahrzeug beginnt, anzufahren.

Ferner versteht sich, dass die Trennkupplung im Zeitraum zwischen t₃ und t₄ auch wieder vollständig geöffnet werden kann. Wichtig ist in diesem Zusammenhang nur, dass die Trennkupplung im Zeitraum zwischen t₁ und t₂ in der Schleppstellung (TK 10 %) steht.

Wäre zum Zeitpunkt t₁ ein Gang eingelegt gewesen, wären die Antriebswelle und die Abtriebswelle des Getriebes miteinander verbunden gewesen. Dann hätte sich die Drehzahl der n_{AN} nicht an die Motordrehzahl n_{M} angeglichen. Die Drehzahl n_{AN} wäre also weiterhin horizontal verlaufen (Null) und somit nicht angestiegen.

Das Verhalten der Antriebswellendrehzahl nach dem Zeitpunkt t₁ wird erfasst und verfolgt. Aus den so gewonnenen Daten kann man z.B. durch Bilden der Ableitung die Steigung - und somit die Änderung - der Antriebswellendrehzahl feststellen. Ergibt sich keine Steigung, folgt als logische Konsequenz, dass noch ein Gang eingelegt ist. Die Steuerung erkennt, dass ein Fehler vorliegt, und kann das System sperren, um weitergehende und schwerwiegendere Beschädigungen des Getriebes zu verhindern.

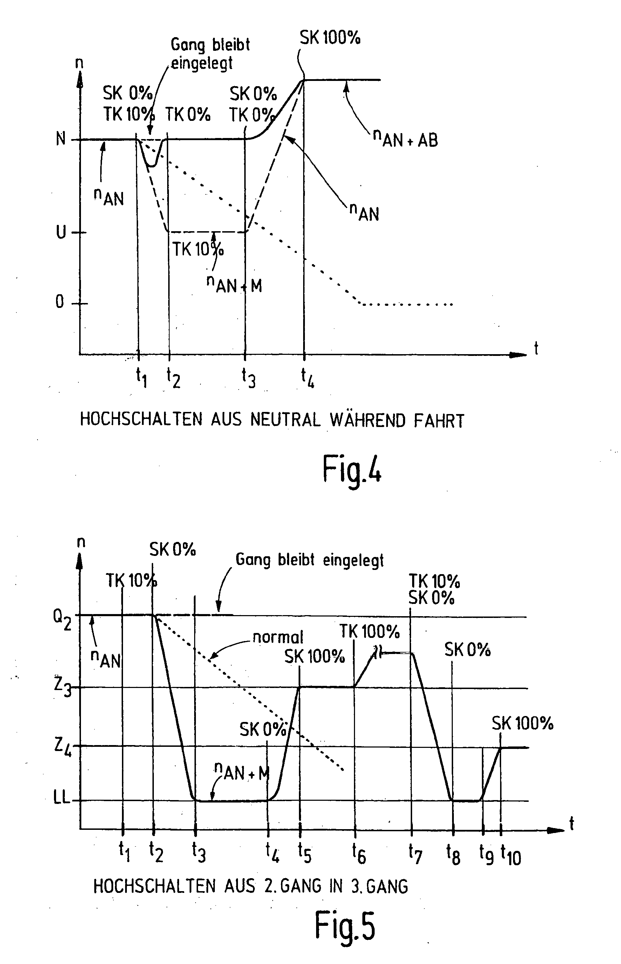

Bezug nehmend auf Fig. 4 ist ein Hochschaltvorgang aus einer Neutralstellung während einer Fahrt des Fahrzeugs gezeigt.

In der Neutralstellung sollte die Antriebswelle von der Abtriebswelle getrennt sein. Wieder wird zum Zeitpunkt t₁ die Trennkupplung in die Schleppstellung gebracht, und relativ kurz danach wieder in die geöffnete Stellung (TK 0 %) zurückgeführt. Wenn die Schaltkupplung tatsächlich offen ist, sollte sich die Drehzahl der Antriebswelle in Richtung einer voreingestellten Drehzahl des Motors, hier in Richtung des exemplarischen Leerlaufs LL, bewegen. Sollte, wider Erwarten, noch immer ein Gang eingelegt sein, würde die Antriebswellendrehzahl n_{AN} nahezu unverändert bleiben.

Mit einer punktierten Linie ist beginnend zum Zeitpunkt t₁ eine Situation gezeigt, die sich einstellen würde, wenn man sowohl die Schaltkupplung als auch die Trennkupplung vollständig öffnen würde. Die Drehzahl der Antriebswelle würde sich dann immer mehr der Null nähern, da die Antriebswelle mit keiner der beiden anderen, sich drehenden Wellen mehr in Verbindung stünde. Um diese beiden Drehzahlabfälle im Zeitraum t₂-t₁ besser unterscheiden zu können, empfiehlt es sich, die Motordrehzahl in der Schleppstellung auf einen Wert einzustellen, der sich hinreichend von der Drehzahl eines Zielgangs, eines Quellgangs und dem Verlauf der Antriebswellendrehzahl bei vollständig geöffneten Kupplungen unterscheidet.

In Fig. 4 ist unschwer zu erkennen, dass die Antriebswellendrehzahl nahezu doppelt so stark abfällt wie bei der Vorgehensweise, wenn beide Kupplungen (TK und SK) vollständig geöffnet werden.

Der Ablauf ab dem Zeitpunkt t₃ der Fig. 4 unterscheidet sich nicht vom Ablauf ab dem Zeitpunkt t₄ bei Fig. 3.

In Fig. 4 ist jedoch die Situation gezeigt, dass die Trennkupplung nach erfolgtem Test während der Zeitdauer t₂-t₁ wieder vollständig geöffnet wird.

Bezug nehmend auf Fig. 5 ist ein Schaltvorgang gezeigt, bei dem aus dem zweiten Gang während einer Fahrt in den dritten Gang geschaltet wird.

Die Drehzahl des zweiten Gangs (Quellgang) ist mit Q2 angedeutet. Die Drehzahl eines ersten Zielgangs (dritter Gang) ist mit Z3 angedeutet und die Drehzahl eines zweiten Zielgangs (vierter Gang) ist mit Z4 angedeutet. Die Motordrehzahl wird hier wieder auf den Leerlauf LL eingestellt. Es versteht sich, dass die vorbestimmte Drehzahl des Motors, während sich die Trennkupplung in der Schleppstellung befindet, auf einen anderen geeigneten Wert (anders als LL) eingestellt werden könnte, wie z.B. auf einen Wert, der bspw. sehr viel höher als Q2, Z3 und Z4 ist oder der dazwischen liegt. In besonderen Fällen (benachbarte Gänge) kann alternativ die Motordrehzahl des Quellgangs beibehalten werden.

Vor einem Zeitpunkt t₁ ist die Schaltkupplung geschlossen, d.h. Antriebswelle und Abtriebswelle drehen gleich schnell. Die Trennkupplung ist ebenfalls geschlossen, da das Fahrzeug fährt.

Zum Zeitpunkt t₁ wird die Trennkupplung in die Schleppstellung (TK 10 %) verfahren. Antriebswelle und Abtriebswelle drehen vorerst mit unveränderter Geschwindigkeit, da das Fahrzeug weiterhin fährt.

Zu einem Zeitpunkt t₂ wird die Schaltkupplung geöffnet, d.h. Antriebswelle und Abtriebswelle werden getrennt. In diesem Moment fällt die Drehzahl n_{AN} in Richtung des Leerlaufs des Motors ab, da ein Drehmoment (Schleppmoment) von der Motorabtriebswelle auf die Antriebswelle des Getriebes übertragen wird.

Zu einem Zeitpunkt t₃ hat die Getriebeantriebswelle die gleiche Geschwindigkeit wie der Motor.

Wäre der Gang nicht tatsächlich ausgelegt worden, wäre die Drehzahl der Antriebswelle nahezu unverändert geblieben (durch gestrichelte Linie in Fig. 5 angedeutet). In diesem Fall würde die Steuerung erkennen, dass ein Fehler vorliegt.

Zu einem Zeitpunkt t₄ erhält das Getriebe ein Gangwechselsignal, um vom zweiten Gang in den dritten Gang hochzuschalten. Dazu wird die Synchronisierungseinrichtung des dritten Gangs allmählich in Eingriff mit dem entsprechenden Zahnrad gebracht. Sobald der dritte Gang eingelegt ist, ist die Schaltkupplung vollständig geschlossen (SK 100 %, Zeitpunkt ts). Anschließend wird die Trennkupplung ebenfalls vollständig geschlossen. Dieser Vorgang ist zum Zeitpunkt t₆ abgeschlossen (TK 100 %). Dabei wurde hier stillschweigend vorausgesetzt, dass die Motorleistung entsprechend erhöht wurde. Sobald die Trennkupplung geschlossen ist, kann die Fahrt des Fahrzeugs im dritten Gang fortgesetzt werden.

Ab dem Zeitpunkt t₇ ist ein weiterer Schaltvorgang in den vierten Gang exemplarisch dargestellt. Hierauf wird nicht näher eingegangen, da es sich lediglich um eine Wiederholung der bereits beim Schalten von dem zweiten Gang in den dritten Gang erläuterten Vorgänge handelt.

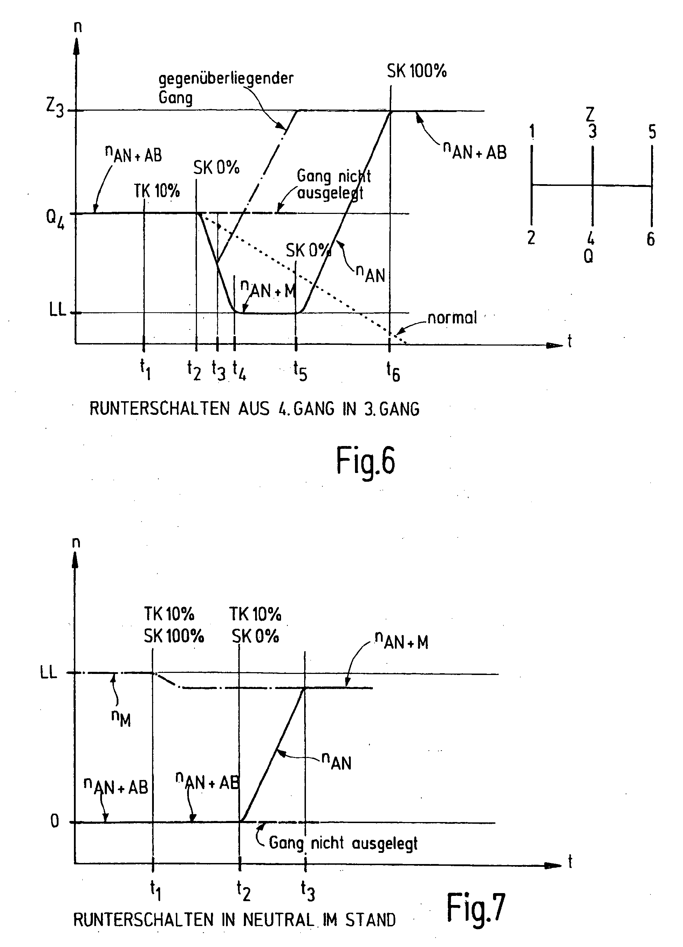

In Fig. 6 ist ein Vorgang exemplarisch gezeigt, bei dem aus dem vierten Gang in den dritten Gang heruntergeschaltet wird. Ergänzend ist eine H-Schaltung rechts neben dem Diagramm skizziert.

Dazu wird zum Zeitpunkt t₁ die Trennkupplung in die Schleppstellung gebracht. Anschließend wird die Schaltkupplung zum Zeitpunkt t₂ vollständig geöffnet. Normalerweise fällt die Drehzahl der Antriebswelle zur voreingestellten Drehzahl des Motors ab (vgl. t₄). Dann kann der dritte Gang eingelegt werden, der bekanntlich höher dreht als der vierte Gang. Zum Zeitpunkt t₆ ist die Schaltkupplung des dritten Gangs vollständig geschlossen.

Da man jedoch auf die Information von Wegsensoren bzw. Wegsensoren als solche verzichten kann, kann es passieren, dass bei einem Schaltvorgang zwei Gänge betätigt werden, die sich direkt gegenüberliegen, d.h. die durch ein und dieselbe Synchronisierungseinrichtung betätigt werden. Um zu verhindern, dass die Synchronisierungseinrichtung dann zu weit bewegt wird, d.h. aus dem Quellgang auskoppelt und bereits in den eventuell nicht gewünschten gegenüberliegenden Gang einkoppelt, wird der gesamte zeitliche Verlauf der Antriebsdrehzahl während der Zeitdauer t₄-t₃ beobachtet.

Sobald die Synchronisierungseinrichtung in den gegenüberliegenden Gang eingreift, kommt es zu einem "Ansynchronisieren" des gegenüberliegenden Gangs, was sich darin äußert, dass sich die Drehzahl der Antriebswelle entsprechend dem "falschen" Gang auf einem bestimmten Drehzahlniveau einpendelt, welches ungleich n_{LL} ist und dem falschen Gang entspricht. Dies wird vom Steuergerät erkannt. Dies ist in Fig. 6 exemplarisch durch eine strichpunktierte Linie angedeutet. Es versteht sich, dass je nach Gangpaar und Ist-Zustand des Fahrzeugs auch eine Drehzahländerung eintreten kann, die sich nicht in einem Richtungswechsel äußerst, wie es in Fig. 6 dargestellt ist, sondern sich die Drehzahl auf einem niedrigeren Niveau einstellt (benachbarter Gang ist ein höherer Gang).

Die Steuerung kann diesen Zustand erkennen, und dann geeignete Gegenmaßnahmen einleiten, um den nicht beabsichtigten Gang wieder auszulegen.

In Fig. 7 ist ein Vorgang gezeigt, bei dem aus einem eingelegten Gang in die Neutralstellung geschaltet wird, wobei das Fahrzeug steht.

Auch hier wird in einem ersten Schritt die Trennkupplung in die Schleppstellung gebracht. Anschließend wird die Schaltkupplung geöffnet und das Verhalten der Antriebsdrehzahl n_{AN} beobachtet.

Sollte ein Gang eingelegt bleiben, würde es nicht zu einem Angleichen der Antriebsdrehzahl n_{AN} an die Motordrehzahl n_{M} kommen.

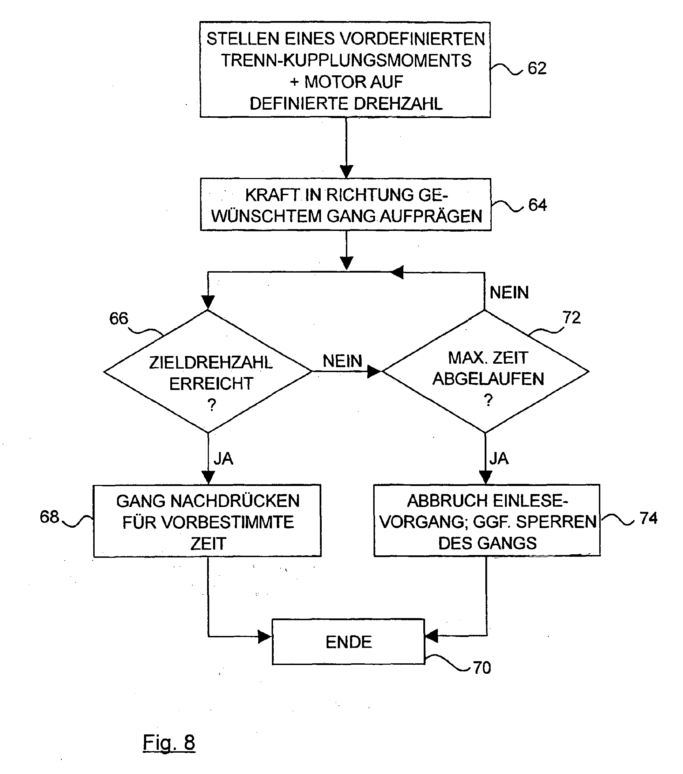

Bezug nehmend auf Fig. 8 ist ein Flussdiagramm schematisch dargestellt, das einen Vorgang zeigt, bei dem ein Gang eingelegt wird. Die Fig. 8 beschreibt insbesondere einen Einlegevorgang aus einer Neutralstellung kommend.

Die Trennkupplung 12 wird mittels Betätigung des Kupplungsaktuators 13 so weit geöffnet bzw. geschlossen, dass die Kupplungselemente in der zuvor erwähnten Schleppstellung stehen. Dabei wird ein vordefiniertes Kupplungsdrehmoment (Schleppmoment), vorzugsweise von wenigen Newtonmetern, übertragen (Block 62). Es muss möglich sein, dass man einen Gang gegen dieses Kupplungsmoment einlegen kann. Ferner wird der Motor auf eine Drehzahl gebracht, die ungleich der Drehzahl des Zielgangs ist (Block 62). Der Motor 48 (vgl. Fig. 2) wird also auf eine geeignete Drehzahl eingeregelt. Besonders geeignet sind Drehzahlen, die sich von der Drehzahl des auszulegenden Gangs und/oder der Drehzahl des einzulegenden Gangs (bei einem Schalten von Gang zu Gang) bzw. der Drehzahl eines falschen (gegenüberliegenden) Ganges hinreichend unterscheiden.

Dann wird z.B. hydraulisch oder elektrisch, je nach verwendeten Aktuator 38, eine Kraft auf die Synchronisierungseinrichtung 36 aufgeprägt, um die Synchronisierungseinrichtung 36 in eine ihrer Schließstellungen 37, 37" zu zwingen (Block 64).

Wenn die Antriebswelle 18 des Getriebes die Zieldrehzahl erreicht (Block 66), kann der Zielgang bzw. dessen Synchronisierungseinrichtung 36 für eine vorbestimmte Zeit nachgedrückt werden (Block 68). Der Zielgang ist dann eingelegt und das Einlegeprogramm ist vorerst beendet (Block 70).

Wenn die Zieldrehzahl noch nicht erreicht ist (Block 66), wobei Toleranzen vorgegeben werden können, wird überprüft, ob eine maximale Zeit abgelaufen ist (Block 72), innerhalb der die Zieldrehzahl inklusive eventueller Toleranzen erreicht sein muss. Diese maximale Zeit stellt eine zeitliche Begrenzung des Vorgangs dar, um bei tatsächlichen Fehlern keine unendlich langen Versuche durchzuführen, den Zielgang einzulegen. Die Überprüfung der Zieldrehzahl (Block 66) wird so lange durchgeführt, bis eine vorgegebenen Maximalzeit abgelaufen ist. Wenn die maximale Zeit abgelaufen ist, ohne dass die Zieldrehzahl erreicht wurde, dann wird der Einlegevorgang abgebrochen. Der Gang oder das Getriebe wird ggf. gesperrt (Block 74).

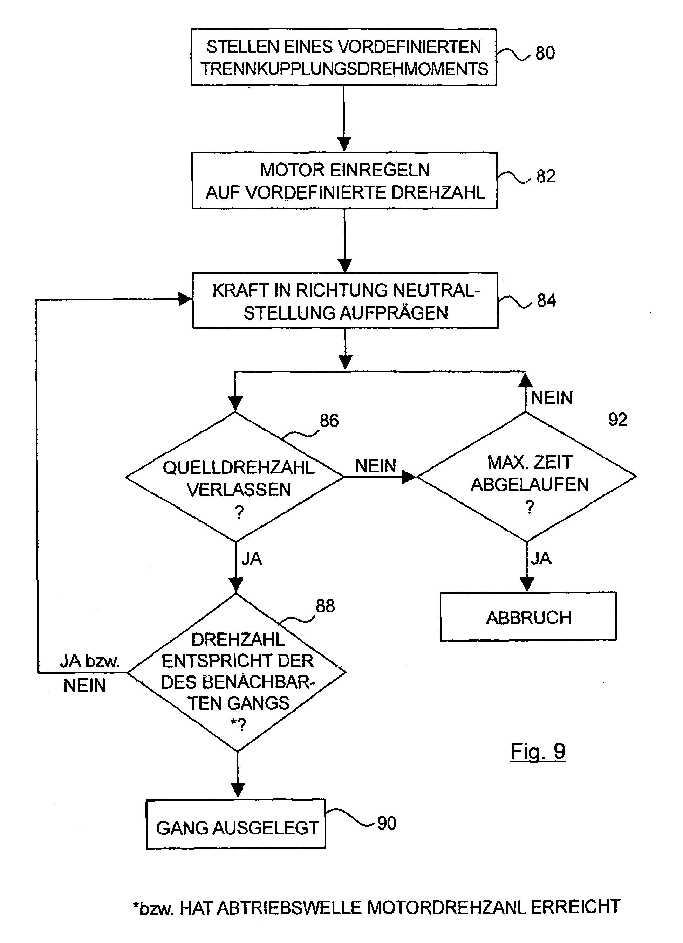

Bezug nehmend auf Fig. 9 ist ein Flussdiagramm gezeigt, das einen Auslegevorgang gemäß der vorliegenden Erfindung am Beispiels eines Auslegevorgangs aus der Gangstellung in die Neutralstellung veranschaulicht.

Dabei wird die Trennkupplung 12 in ihre Schleppstellung gebracht, so dass ein vordefiniertes Kupplungsdrehmoment von wenigen Newtonmetern übertragen wird (Block 80). Ein Auslegen des Quellgangs gegen dieses Kupplungsdrehmoment sollte möglich sein.

Der Motor wird auf eine Drehzahl eingeregelt, die ungleich der Drehzahl des Quellgangs ist. Soll anschließend ein neuer Gang eingelegt werden, so ist es von Vorteil, wenn die eingestellte Drehzahl des Motors ungleich der Drehzahl des Zielgangs bzw. des gegenüberliegenden Gangs ist. Die Drehzahl kann aber auch zwischen Quell- und Zielgang eingeregelt werden. Insbesondere wird die Drehzahl des Motors unterhalb der niedrigeren Drehzahl von Quell- und Zielgang oder oberhalb der höheren Drehzahl von Quell- und Zielgang eingeregelt. Das Einregeln des Motors ist in Block 82 dargestellt.

Dann wird eine Kraft auf den Getriebeaktuator 38 ausgeübt, und zwar derart, dass die Synchronisierungseinrichtung 36 in Richtung ihrer Neutralstellung bzw. Offenstellung bewegt wird (Block 84).

Dann wird überprüft, ob die Drehzahl des Quellgangs verlassen wurde (Block 86).

Falls die Quelldrehzahl verlassen wurde, kann überprüft werden, ob die Drehzahl eines zum Quellgang benachbarten Gangs (vgl. Schließstellungen 37 und 37" in Fig. 1) erreicht wird (Block 88). Alternativ kann geprüft werden, ob die Antriebswelle die (vorab) eingestellte Motordrehzahl erreicht hat. Hier sei ergänzend bemerkt, dass bei der vorliegenden Beschreibung durchweg stillschweigend angenommen wird, dass eine Fahrtgeschwindigkeit während des Schaltens konstant bleibt. In der Praxis kann dies auch anders sein, so dass dieser Effekt bei der Wahl einer geeigneten Motordrehzahl entsprechend zu berücksichtigen ist.

Sollte sich die Drehzahl in Richtung der Drehzahl des benachbarten Gangs entwickeln, so wird eine weitere (entgegengesetzte) Kraft auf die Synchronisierungseinrichtung 36 ausgeübt, um die Synchronisierungseinrichtung 36 in ihre Neutralstellung 37' zu bewegen (vgl. Block 84). Nähert sich die Drehzahl der Getriebeantriebswelle 18 jedoch nicht der Drehzahl des benachbarten Gangs, so ist der Quellgang ausgelegt (Block 90).

Ergibt die Überprüfung des Blocks 86, dass die Quelldrehzahl noch nicht verlassen wurde, so wird überprüft, ob eine maximale Zeit abgelaufen ist (Block 92). Falls die maximale Zeit noch nicht abgelaufen ist, so wird weiterhin Kraft aufgeprägt und erneut überprüft, ob die Quelldrehzahl verlassen wurde. Wenn jedoch die maximale Zeit abgelaufen ist und die Quelldrehzahl wurde nicht verlassen, so ist davon auszugehen, dass tatsächlich ein Fehler vorliegt, so dass der Auslegevorgang abgebrochen wird (Block 94). Dies kann ggf. durch Sperren des (Teil-)Getriebes erfolgen.

Die im Zusammenhang mit den Figuren 8 und 9 angeführten "maximalen Zeiten" stellen Wartezeiten dar, die an das jeweilige System und die herrschenden Bedingungen (Temperatur, etc.) angepasst sein sollten. Die Betätigung der Aktuatorik eines Gangs erfolgt üblicherweise nach definierten zeitlichen Verläufen. Die Zeiten, die üblicherweise benötigt werden, um einen Gang einzulegen oder auszulegen, sind abhängig vom Getriebe und dem Fachmann bekannt.

Ferner versteht sich, dass die Neutralstellung des Getriebes, wenn kein Gang eingelegt ist, von den Begriffen "Quellgang" und "Zielgang" umfasst ist, wenn es um die vorliegende Beschreibung eines Schaltvorgangs geht. Wenn ein Gang ausgelegt wird, dann stellt die Neutralstellung (vorerst) einen "Zielgang" dar, was den Wortlaut der nachfolgenden Patentansprüche betrifft.

## Patentansprüche

1. Verfahren zum Schalten, insbesondere Ein- und/oder Auslegen, von Gängen eines automatisierten Stufengetriebes eines Kraftfahrzeugs, wobei das Getriebe eine mit einer Motorabtriebswelle (16) über eine als Trennkupplung (12) wirkende Reibungskupplung (12) verbindbare Antriebswelle (18) und eine an ein Antriebsrad bzw. Antriebsräder des Kraftfahrzeugs koppelbare Abtriebswelle (20) aufweist, **dadurch gekennzeichnet, daß** ein Schaltvorgang, insbesondere nur, in Abhängigkeit von Drehzahlen (n) der Wellen erfolgt, wobei jedem Gang eine als Schaltkupplung wirkende Synchronisierungseinrichtung (36) zugeordnet ist, um die Antriebswelle (18) mit der Abtriebswelle (20) zu verbinden, mit den folgenden Schritten:
- Stellen der Trennkupplung (12) in eine Schleppstellung derart, dass ein geringes, vorzugsweise vordefiniertes, Schleppmoment von der Motorabtriebswelle (16) auf die Antriebswelle (18) übertragen wird, welches ausreicht, um eine Drehzahl (n_{AN}) der Antriebswelle (18) bei offener Schaltkupplung (36) auf eine Drehzahl (n_{M}) der Motorabtriebswelle (16) zu bringen;
- Einstellen der Drehzahl der Motorabtriebswelle (16) auf einen vorbestimmten Wert , der sich von einer Drehzahl eines Quellgangs bzw. einer Drehzahl eines Zielgangs hinreichend unterscheidet;
- Stellen der Schaltkupplung (36) des Quellgangs in Richtung einer geöffnete Stellung, um die Antriebswelle (18) und Abtriebswelle (20) voneinander zu trennen;
- Erfassen der Drehzahl (n_{AN}) der Antriebswelle für eine vorbestimmte Zeitdauer, die sich zumindest an einen Zeitpunkt (t₁), wenn die Schaltkupplung (36) des Quellgangs in der geöffneten Stellung ist, anschließt;
- Bestimmen einer Änderung der Drehzahl (n_{AN}) der Antriebswelle (18) während der vorbestimmten Zeitdauer; und
- Bestimmen, ob die so bestimmte Änderung innerhalb vorgegebener Toleranzen einer erwarteten Drehzahländerung liegt.

2. Verfahren nach Anspruch 1, das ferner den Schritt aufweist:
- wenn sich die Drehzahl (n_{AN}) der Antriebswelle (18) während der vorbestimmten Zeitdauer nicht auf einen erwarteten Wert ändert, Rückstellen der Schaltkupplung (36) des Quellgangs, um in die geöffnete Stellung zu gelangen.

3. Verfahren nach Anspruch 1 oder 2, das ferner den Schritt aufweist:
- Ausüben einer Stellkraft auf eine Synchronisierungseinrichtung des Zielgangs zum Gangeinlegen.

4. Verfahren nach einem der vorhergehenden Ansprüche, wobei der Schaltvorgang abgebrochen wird, wenn die so bestimmte Drehzahländerung außerhalb der vorgegebenen Toleranzen um die erwartete Drehzahländerung herum liegt.

5. Verfahren nach Anspruch 4, wobei entweder der Gang, bei dem die Abweichung erkannt wurde, oder das gesamte Getriebe gesperrt wird.

6. Verfahren nach einem der vorhergehenden Ansprüche, wobei die Trennkupplung (12) zumindest während dieser vorbestimmten Zeitdauer in der Schleppstellung verbleibt.

7. Verfahren nach einem der vorhergehenden Ansprüche, wobei einer zeitlicher Ablauf des Schaltens in Abhängigkeit von Betriebsparametern, insbesondere von der Temperatur, erfolgt.

8. Verfahren nach einem der vorhergehenden Ansprüche, wobei das Verfahren als Notfallprogramm angewendet wird, wenn ein Wegssensor einer der Schaltkupplung (36) ausfällt.

9. Verfahren nach Anspruch 8, wobei in einen Automatmodus gewechselt wird, bei den Schaltvorgänge nur mit Zugkraftunterbrechung durchgeführt werden.

10. Verfahren nach einem der vorgehenden Ansprüche, wobei gleichzeitig ein Motoreingriff erfolgt, um insbesondere während Synchronisierungsvorgängen die Drehzahl der Motorwelle annähernd konstant zu halten.

11. Steuereinrichtung (40) für ein automatisiertes Getriebe eines Kraftfahrzeugs, **dadurch gekennzeichnet, dass** sie zum Durchführen des Verfahrens gemäß einem der Ansprüche 1 bis 10 angepasst ist.

12. Automatisiertes Stufengetriebe für ein Kraftfahrzeug, wobei das Getriebe eine mit einer Motorabtriebswelle (16) über eine als Trennkupplung (12) wirkende Reibungskupplung (12) verbindbare Antriebswelle (18) und eine an ein Antriebsrad bzw. Antriebsräder des Kraftfahrzeugs koppelbare Abtriebswelle (20) aufweist, **dadurch gekennzeichnet, dass** ein Schaltvorgang, insbesondere nur, in Abhängigkeit von Drehzahlen (n) der Wellen erfolgt, wobei jedem Gang eine als Schaltkupplung wirkende Synchronisierungseinrichtung (36) zugeordnet ist, um die Antriebswelle (18) mit der Abtriebswelle (20) zu verbinden, und wobei das Getriebe eine zentrale Steuerung (40) umfasst, die angepasst ist, das Verfahren gemäß einem der Ansprüche 1 bis 10 durchzuführen.

13. Stufengetriebe nach Anspruch 12, das des Weiteren eine Kupplungssteuerung (42), eine Getriebesteuerung (44) und eine Motorsteuerung (46) aufweist.

14. Stufengetriebe nach Anspruch 12 oder 13, das nur Drehgeber aufweist, um wegsensorunabhängig schalten zu können.

## Claims

1. Method for shifting, in particular engaging and/or disengaging, gears in an automatic multi-stage gearbox of a motor vehicle, wherein the gearbox comprises a drive input shaft (18) connectable to an engine output shaft (16) by means of a friction clutch (12), which acts as a separating clutch (12), and a drive output shaft (20) couplable to a drive wheel or to drive wheels of the motor vehicle, **characterized in that** a shift process takes place, in particular only, as a function of rotational speeds (n) of the shafts, wherein each gear is assigned a synchronizing device (36), which acts as a shift clutch, in order to connect the drive input shaft (18) to the drive output shaft (20), comprising the following steps:
- setting the separating clutch (12) into a dragging position such that a low, preferably predefined, drag torque is transmitted from the engine drive output shaft (16) to the drive input shaft (18), which drag torque is sufficient to bring a rotational speed (n_{IS}) of the drive input shaft (18), when the shift clutch (36) is open, to a rotational speed (n_{E}) of the engine drive output shaft (16);
- adjusting the rotational speed of the engine drive output shaft (16) to a predetermined value which differs sufficiently from a rotational speed of a source gear or from rotational speed of a target gear;
- setting the shift clutch (36) of the source gear towards an open position in order to separate the drive input shaft (18) and drive output shaft (20) from one another;
- detecting the rotational speed (n_{IS}) of the drive input shaft for a predetermined time period which follows at least a time (t₁) when the shift clutch (36) of the source gear is in the open position;
- determining a change in the rotational speed (n_{IS}) of the drive input shaft (18) during the predetermined time period; and
- determining whether the change which is determined in this way lies within predefined tolerances of an expected rotational speed change.

2. Method according to Claim 1, which further comprises the step:
- if the rotational speed (n_{IS}) of the drive input shaft (18) does not change to an expected value during the predetermined time period, resetting the shift clutch (36) of the source gear in order to move into the open position.

3. Method according to Claim 1 or 2, which further comprises the step:
- exerting an actuating force on a synchronizing device of the target gear in order to engage the gear.

4. Method according to one of the preceding claims, wherein the shift process is stopped if the rotational speed change which is determined in this way lies outside the predefined tolerances about the expected rotational speed change.

5. Method according to Claim 4, wherein either the gear in which the deviation was detected or the entire gearbox is blocked.

6. Method according to one of the preceding claims, wherein the separating clutch (12) remains in the dragging position at least during said predetermined time period.

7. Method according to one of the preceding claims, wherein a temporal course of the shift process takes place as a function of operating parameters, in particular of the temperature.

8. Method according to one of the preceding claims, wherein the method is used as an emergency program if a travel sensor of one of the shift clutches (36) fails.

9. Method according to Claim 8, wherein a change is made into an automatic mode in which the shift processes are carried out only with an interruption of traction force.

10. Method according to one of the preceding claims, wherein an engine intervention simultaneously takes place, in particular in order to keep the rotational speed of the engine shaft approximately constant during synchronization processes.

11. Control device (40) for an automatic gearbox of a motor vehicle, **characterized in that** the gearbox is suitable for carrying out the method according to one of Claims 1 to 10.

12. Automatic multi-stage gearbox for a motor vehicle, with the gearbox comprises a drive input shaft (18) connectable to an engine drive output shaft (16) by means of a friction clutch (12) which acts as a separating clutch (12), and a drive output shaft (20) couplable to a drive wheel or to drive wheels of the motor vehicle, **characterized in that** a shift process takes place, in particular only, as a function of rotational speeds (n) of the shafts, wherein each gear is assigned a synchronizing device (36), which acts as a shift clutch, in order to connect the drive input shaft (18) to the drive output shaft (20), and wherein the gearbox comprises a central controller (40) which is suitable for carrying out the method according to any one of Claims 1 to 10.

13. Multi-stage gearbox according to Claim 12, which also has a clutch controller (42), a gearbox controller (44) and an engine controller (46).

14. Multi-stage gearbox according to Claim 12 or 13, which has only rotary transducers in order to be able to shift in a travel-sensor-independent fashion.

## Revendications

1. Procédé pour commuter, en particulier pour enclencher et/ou désenclencher, des rapports d'une boîte de vitesses étagée automatisée d'un véhicule automobile, la boîte de vitesses présentant un arbre d'entraînement (18) pouvant être relié à un arbre de prise de force du moteur (16) par le biais d'un embrayage à friction (12) agissant en tant qu'embrayage de séparation (12) et un arbre de prise de force (20) pouvant être accouplé à une roue motrice ou à des roues motrices du véhicule automobile, **caractérisé en ce qu'**une opération de changement de vitesses n'a lieu notamment qu'en fonction de vitesses de rotation (n) des arbres, à chaque rapport étant associé un dispositif de synchronisation (36) agissant en tant qu'embrayage de changement de vitesses afin de relier l'arbre d'entraînement (18) à l'arbre de prise de force (20), le procédé comprenant les étapes suivantes :
- positionnement de l'embrayage de séparation (12) dans une position de glissement de telle sorte qu'un faible couple de glissement, de préférence prédéfini, soit transmis de l'arbre de prise de force du moteur (16) à l'arbre d'entraînement (18), lequel est suffisant pour amener une vitesse de rotation (n_{AN}) de l'arbre d'entraînement (18) lorsque l'embrayage de changement de vitesses (36) est ouvert à une vitesse de rotation (n_{M}) de l'arbre de prise de force du moteur (16) ;
- ajustement de la vitesse de rotation de l'arbre de prise de force du moteur (16) à une valeur prédéterminée, qui est suffisamment différente d'une vitesse de rotation d'un rapport initial ou d'une vitesse de rotation d'un rapport cible ;
- positionnement de l'embrayage de changement de vitesses (36) du rapport initial dans la direction d'une position ouverte, afin de séparer l'un de l'autre l'arbre d'entraînement (18) et l'arbre de prise de force (20) ;
- détection de la vitesse de rotation (n_{AN}) de l'arbre d'entraînement pendant une période de temps prédéterminée qui suit au moins un instant (t₁) auquel l'embrayage de changement de vitesses (36) du rapport initial est dans la position ouverte ;
- détermination d'une variation de la vitesse de rotation (n_{AN}) de l'arbre d'entraînement (18) pendant la période de temps prédéterminée ; et
- détermination pour savoir si la variation ainsi déterminée se situe à l'intérieur de tolérances prédéfinies d'une variation de vitesse de rotation attendue.

2. Procédé selon la revendication 1, présentant en outre l'étape suivante :
- si la vitesse de rotation (n_{AN}) de l'arbre d'entraînement (18) ne varie pas à une valeur attendue pendant la période de temps prédéterminée, retour de l'embrayage de changement de vitesses (36) du rapport initial jusque dans la position ouverte.

3. Procédé selon la revendication 1 ou 2, comprenant en outre l'étape suivante :
- application d'une force de réglage sur un dispositif de synchronisation du rapport cible en vue d'enclencher le rapport.

4. Procédé selon l'une quelconque des revendications précédentes, dans lequel l'opération de changement de vitesses est interrompue si la variation de vitesse de rotation ainsi déterminée se situe à l'extérieur des tolérances prédéfinies autour de la variation de vitesse de rotation attendue.

5. Procédé selon la revendication 4, dans lequel soit le rapport auquel l'écart a été détecté, soit l'ensemble de la boîte de vitesses, est bloqué.

6. Procédé selon l'une quelconque des revendications précédentes, dans lequel l'embrayage de séparation (12) reste dans la position de glissement au moins pendant cette période de temps prédéterminée.

7. Procédé selon l'une quelconque des revendications précédentes, dans lequel un déroulement dans le temps de la commutation a lieu en fonction de paramètres de fonctionnement, en particulier de la température.

8. Procédé selon l'une quelconque des revendications précédentes, dans lequel le procédé est utilisé en tant que programme de secours lorsqu'un capteur de position de l'un des embrayages de changement de vitesses (36) tombe en panne.

9. Procédé selon la revendication 8, dans lequel on passe à un mode automatique dans lequel les opérations de changement de vitesses ne sont effectuées qu'avec interruption de la force de traction.

10. Procédé selon l'une quelconque des revendications précédentes, dans lequel une intervention a lieu simultanément sur le moteur, afin de maintenir approximativement constante la vitesse de rotation de l'arbre du moteur notamment pendant des opérations de synchronisation.

11. Dispositif de commande (40) pour une boîte de vitesses automatisée d'un véhicule automobile, **caractérisé en ce qu'**il est prévu pour mettre en oeuvre le procédé selon l'une quelconque des revendications 1 à 10.

12. Boîte de vitesses étagée automatisée pour un véhicule automobile, dans laquelle la boîte de vitesses présente un arbre d'entraînement (18) pouvant être relié à un arbre de prise de force du moteur (16) par le biais d'un embrayage à friction (12) agissant en tant qu'embrayage de séparation (12) et un arbre de prise de force (20) pouvant être accouplé à une roue motrice ou à des roues motrices du véhicule automobile, **caractérisée en ce qu'**une opération de changement de vitesses n'a lieu notamment qu'en fonction de vitesses de rotation (n) des arbres, à chaque rapport étant associé un dispositif de synchronisation (36) agissant en tant qu'embrayage de changement de vitesses afin de relier l'arbre d'entraînement (18) à l'arbre de prise de force (20), et dans laquelle la boîte de vitesses comprend une commande centrale (40) qui est prévue pour mettre en oeuvre le procédé selon l'une quelconque des revendications 1 à 10.

13. Boîte de vitesses étagée selon la revendication 12, présentant en outre une commande d'embrayage (42), une commande de boîte de vitesses (44) et une commande de moteur (46).

14. Boîte de vitesses étagée selon la revendication 12 ou 13, qui présente seulement des capteurs rotatifs afin de pouvoir effectuer une commutation indépendamment d'un capteur de position.
